(19) Europäisches Patentamt
European Patent Office
Office européen des brevets

(11) **EP 2 211 403 B1**

(12) **EUROPEAN PATENT SPECIFICATION**

(45) Date of publication and mention
of the grant of the patent:
**06.12.2017 Bulletin 2017/49**

(51) Int Cl.:
**H01M 4/587** $^{(2010.01)}$   **C01B 32/20** $^{(2017.01)}$
**H01M 4/133** $^{(2010.01)}$   **H01M 10/0525** $^{(2010.01)}$

(21) Application number: **08835361.0**

(22) Date of filing: **02.10.2008**

(86) International application number:
**PCT/JP2008/067884**

(87) International publication number:
**WO 2009/044789 (09.04.2009 Gazette 2009/15)**

(54) **ARTIFICIAL GRAPHITE FOR NEGATIVE ELECTRODE OF LITHIUM ION SECONDARY BATTERY, AND METHOD FOR PRODUCTION THEREOF**

KÜNSTLICHER GRAPHIT FÜR NEGATIVE ELEKTRODE EINER LITHIUMIONEN-SEKUNDÄRBATTERIE UND HERSTELLUNGSVERFAHREN DAFÜR

GRAPHITE ARTIFICIEL POUR ÉLECTRODE NÉGATIVE D'UNE BATTERIE SECONDAIRE LITHIUM-ION, ET SON PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.10.2007   JP 2007259098**

(43) Date of publication of application:
**28.07.2010   Bulletin 2010/30**

(73) Proprietor: **Nippon Oil Corporation**
**Tokyo 105-8412 (JP)**

(72) Inventors:
• **SAKAMOTO, Akio**
  **Tokyo 105-8412 (JP)**
• **TAKESHITA, Kiwamu**
  **Tokyo 105-8412 (JP)**
• **FUJII, Masaki**
  **Kawasaki-shi**
  **Kanagawa 210-8532 (JP)**
• **TANO, Tamotsu**
  **Kuga-gun**
  **Yamaguchi 740-0061 (JP)**
• **OYAMA, Takashi**
  **Kuga-gun**
  **Yamaguchi 740-0061 (JP)**

(74) Representative: **Grünecker Patent- und Rechtsanwälte**
**PartG mbB**
**Leopoldstraße 4**
**80802 München (DE)**

(56) References cited:
**EP-A2- 1 186 646     JP-A- 2000 012 034**
**JP-A- 2000 048 811     JP-A- 2000 313 609**
**JP-A- 2003 077 473     JP-A- 2003 297 357**

## Description

### Technical Field

The present invention relates to artificial graphite for the negative electrode of a lithium ion secondary battery, and to a method for production thereof.

### Background Art

Lithium ion secondary batteries have higher energy densities than conventional secondary batteries such as nickel cadmium cells, nickel hydrogen cells and lead storage batteries and are therefore expected to have applications in hybrid vehicles and electric vehicles. The carbon materials used as active materials in the electrodes of secondary batteries have been extensively studied with the aim of increasing their performance (see Patent documents 1 and 2, for example).

Carbon materials used as negative electrode materials in lithium ion secondary batteries are largely classified as either graphite or amorphous. Graphite carbon materials have the advantage of high energy density per unit volume compared to amorphous carbon materials. Therefore, graphite carbon materials are widely used as negative electrode materials in lithium ion secondary batteries for cellular phones and laptop computers that are compact and require large service capacities. Graphite has a structure with layers of carbon atoms regularly arranged in a hexagonal mesh, and during charge-discharge, intercalation-deintercalation of lithium ions takes place at the edges of the hexagonal mesh.

### Citation List

[Patent document 1] Japanese Patent Publication No. 3056519
[Patent document 2] Japanese Examined Patent Publication HEI No. 4-24831
Patent document JP2003/297357 discloses a process of manufacture of an artificial graphite negative electrode material for a lithium secondary battery.

### Summary of Invention

### Problems to be Solved by the Invention

However, while increased energy densities per unit volume are obtained as mentioned above when graphite carbon materials are used as negative electrode materials in lithium ion secondary batteries, the charge-discharge rates are still in need of improvement for application to automobiles such as hybrid vehicles. This is attributed to the fact that the high crystallinity of graphite does not allow adequately efficient diffusion of solvated lithium ions into the crystal interiors.

The present invention has been accomplished in light of these circumstances, and its object is to provide artificial graphite for the negative electrode of a lithium ion secondary battery, that is useful for achieving superior levels of both high energy density and high charge-discharge rates in lithium ion secondary batteries, as well as a method for production thereof.

### Means for Solving the Problems

As a result of measuring different types of artificial graphite by wide-angle X-ray diffraction and comparatively examining their suitability as negative electrode materials for lithium ion secondary batteries, the present inventors have completed this invention upon finding that it is possible to overcome the aforementioned disadvantage of graphite carbon materials and improve the charge-discharge rate, and especially the charge rate, by using artificial graphite having a specific structure as the negative electrode material of a lithium ion secondary battery.

Specifically, the present invention provides an artificial graphite according to appended claim 1.

When artificial graphite of the invention is used as a negative electrode material it is possible to obtain superior levels of both a high charge-discharge rate and high energy density per unit volume for lithium ion secondary batteries.

From the viewpoint of obtaining even more superior levels of both a high charge-discharge rate and high energy density per unit volume for lithium ion secondary batteries, the artificial graphite of the invention preferably has the following structure.

That is, the artificial graphite of the invention preferably has a crystallite size La of 100-250 nm in the a-axial direction according to X-ray diffraction, and a crystallite size La of 300 nm or greater when subjected to graphitizing in an inert gas atmosphere at a temperature of 3000°C.

Also, the artificial graphite of the invention preferably has a mean interlayer distance $d_{002}$ of 0.3365-0.3375 nm according to X-ray diffraction, and a mean interlayer distance $d_{002}$ of no greater than 0.3361 nm when subjected to graphitizing in an inert gas atmosphere at a temperature of 3000°C.

The method for producing the artificial graphite for the negative electrode of a lithium ion secondary battery according to the invention comprises a first step of coking treatment of a stock oil composition obtained by combining two or more different stock oils selected from among vacuum residue oil, FCC heavy oil and desulfurized heavy oil produced in the petroleum refining process, a second step of calcining the treated product obtained from the first step at a temperature of 1200-1500°C, and a third step of heat treating the treated product obtained from the second step at a temperature of 2300-2600 °C, wherein the artificial graphite obtained from the third step has a crystallite size Lc of 60-120 nm in the c-axial direction according to X-ray diffraction, and a crystallite size Lc of 150 nm or greater when subjected to graphitizing in an inert gas atmosphere at a temperature of 3000°C.

According to the method of the invention it is possible to industrially produce artificial graphite that allows superior levels to be achieved for both a high charge-discharge rate and high energy density per unit volume for lithium ion secondary batteries, with a high degree of reproducibility.

### Effect of the Invention

According to the invention it is possible to provide artificial graphite for the negative electrode of a lithium ion secondary battery, that is useful for achieving superior levels of both high energy density and high charge-discharge rates in lithium ion secondary batteries, as well as a method for production thereof.

By using artificial graphite of the invention as the negative electrode in a lithium ion secondary battery it is possible to obtain a lithium ion secondary battery with a rapid charge rate and high energy density per unit volume. The lithium ion secondary battery is suitable not only for cellular phones and laptop computers but also for other purposes that require rapid charge-discharge, such as hybrid vehicles, plug-in hybrid vehicles, electric vehicles and power tools.

### Description of Embodiments

Preferred embodiments of the invention will now be described in detail.

<Artificial graphite for the negative electrode of a lithium ion secondary battery>

The artificial graphite of the invention has a crystallite size Lc of 60-120 nm in the c-axial direction according to X-ray diffraction, and a crystallite size Lc of 150 nm or greater when subjected to graphitizing in an inert gas atmosphere at a temperature of 3000°C. The artificial graphite exhibits excellent performance as a negative electrode material for a lithium ion secondary battery. Graphitizing refers to heat treatment at 3000°C in an atmosphere with 95 vol% or greater nitrogen gas, for 1 hour or longer.

If the crystallite size Lc of the artificial graphite is smaller than 60 nm, the energy density per unit volume of the lithium ion secondary battery will be insufficient. If the crystallite size Lc is greater than 120 nm, on the other hand, the charge rate will be insufficient. If the crystallite size Lc after graphitizing treatment is smaller than 150 nm, the energy density per unit volume will be insufficient and the charge rate will be unsatisfactory.

The artificial graphite preferably also satisfies the following conditions.

The artificial graphite has a crystallite size Lc of 60-120 nm as mentioned above, but the lower limit for the crystallite size Lc is more preferably 70 nm and even more preferably 80 nm. The upper limit for the crystallite size Lc of the artificial graphite is more preferably 110 nm and even more preferably 100 nm. The artificial graphite preferably has a crystallite size Lc after graphitizing of 160 nm or greater.

The artificial graphite preferably has a lower limit of 100 nm and more preferably 125 nm for the crystallite size La in the a-axial direction, as determined by wide-angle X-ray diffraction. If the crystallite size La of the artificial graphite is smaller than 100 nm, the energy density per unit volume of the lithium ion secondary battery will tend to be insufficient. On the other hand, the upper limit for the crystallite size La is preferably 250 nm and more preferably 200 nm. If the crystallite size La exceeds 250 nm, the charge rate of the lithium ion secondary battery will tend to be insufficient.

The artificial graphite preferably has a graphitized crystallite size La of 300 nm or greater, more preferably 400 nm or greater and even more preferably 500 nm or greater. If the graphitized crystallite size La is less than 300 nm, the energy density per unit volume and the charge rate of the lithium ion secondary battery will tend to be insufficient.

The artificial graphite has a mean interlayer distance $d_{002}$ of preferably 0.3365-0.3375 nm and more preferably 0.3367-0.3372 nm, as determined by wide-angle X-ray diffraction. If the mean interlayer distance $d_{002}$ of the artificial graphite is less than 0.3365 nm, the energy density per unit volume of the lithium ion secondary battery will tend to be insufficient. If the mean interlayer distance $d_{002}$ is greater than 0.3375 nm, the charge rate of the lithium ion secondary battery will tend to be insufficient.

The artificial graphite has a mean interlayer distance $d_{002}$ of preferably no greater than 0.3361 nm and more preferably no greater than 0.3359 nm after graphitizing, as determined by wide-angle X-ray diffraction. If the mean interlayer distance $d_{002}$ after graphitizing is greater than 0.3361 nm, the energy density per unit volume and the charge rate of the lithium ion secondary battery will tend to be insufficient.

For this embodiment, the interlayer distance $d_{002}$ (lattice constant) and crystallite sizes Lc, La of the artificial graphite and its graphitized form are the values determined by X-ray diffraction according to "Measurement Methods for Lattice Constants and Crystallite Sizes of Artificial Graphite" established by the 117th Committee of the Japan Society for the Promotion of Science, and they are measured as follows.

Specifically, a sample powder is filled into a specimen holder and the X-ray diffraction pattern is obtained with a line source of CuKα-rays monochromatized with a graphite monochromator. The peak position in the diffraction pattern is determined by the elastic center method (a method in which the center of gravity of the diffraction profile is calculated and the position of the peak at the corresponding 2θ value is determined), with correction using the diffraction peak of the (111) plane for high purity silicon powder as the reference material. The wavelength of the CuKα-rays is 0.15418 nm, and the interlayer distance $d_{002}$ of the microcrystalline carbon is calculated by the Bragg equation represented by the following formula (1).

$$d_{002} = \lambda/(2\sin\theta) \ (1)$$

The presence of graphite structure formation in the specimen can be confirmed by whether a distinct peak with 2θ at approximately 25° is found in the powder X-ray diffraction pattern of the specimen. Specifically, graphite has structure comprising numerous layers each with a planar network structure of benzene rings, and in powder X-ray diffraction measurement a diffraction peak based on $C_{002}$ is observed as a sharp peak (2θ near 25°) at interlayer distance $d_{002}$ = 0.335 nm. The half-power band width (β) is measured from the diffraction profile and the crystallite sizes are determined by following formula (2).

$$Lc_{002} = 91/\beta \ (2)$$

The graphitized artificial graphite of this embodiment has a structure highly similar to graphite when their X-ray diffraction patterns are compared.

<Production method>

A method for producing artificial graphite for the negative electrode of a lithium ion secondary battery will now be explained in detail. The production method is not particularly restricted so long as it can produce artificial graphite satisfying these conditions, but the method for producing artificial graphite according to the invention yields a stock oil composition, and comprises each of the following treatments so that the obtained artificial graphite has a crystallite size Lc of 60-120 nm in the c-axial direction according to X-ray diffraction, and a crystallite size Lc of 150 nm or greater when subjected to graphitizing in an inert gas atmosphere at a temperature of 3000°C.

Specifically, the method for producing artificial graphite according to the invention comprises a first step of coking treatment (dry distillation treatment) of a stock oil composition obtained by combining two or more different stock oils selected from among vacuum residue oil, FCC heavy oil and desulfurized heavy oil produced in the petroleum refining process, a second step of calcining the treated product obtained from the first step at a temperature of 1200-1500°C, and a third step of heat treating the treated product obtained from the second step at a temperature of 2300 - 2600°C to obtain artificial graphite.

When the artificial graphite obtained by these steps does not satisfy the preferred conditions for the crystallite sizes Lc, La and mean interlayer distance $d_{002}$, appropriate modification may be made to the stock oil composition components or mixing ratio and the coking treatment conditions, calcining conditions and graphitization conditions.

(Stock oil composition)

The vacuum residue oil is preferably heavy oil having an initial boiling point of 300°C or higher, an asphaltene content of no greater than 12 wt%, a saturated component content of 50 wt% or greater and a sulfur content of no greater than 0.3 wt%, obtained as residue oil after vacuum distillation of a prescribed stock oil. The stock oil may be, for example, crude oil, vacuum distillation bottom oil obtained by distillation of crude oil, or a blended oil comprising them. The treatment conditions for vacuum distillation of such stock oils are not particularly restricted so long as the boiling point, asphaltene content, saturated component and sulfur content of the obtained vacuum residue oil each satisfy the conditions mentioned above, but the pressure is preferably no higher than minus 30 kPa and the temperature is preferably at least 400°C.

FCC heavy oil is preferably heavy oil with an initial boiling point of 150°C or higher and a sulfur content of no greater than 0.5 wt%, obtained by fluidized catalytic cracking of a prescribed stock oil. The term "fluidized catalytic cracking" means treatment using a solid acid catalyst for decomposition of the high boiling point fraction. The fluidized catalytic cracker used for the treatment is called a FCC (Fluidized Catalytic Cracking) apparatus. The stock oil for FCC heavy oil is not particularly restricted so long as it can yield heavy oil that satisfies the aforementioned conditions for the boiling point and sulfur content by fluidized catalytic cracking, but it is preferably hydrocarbon oil with a 15°C density of 0.8 g/cm$^3$ or greater. As such stock oils there may be mentioned atmospheric distillation bottom oil, vacuum distillation bottom oil, shale oil, tar sand bitumen, Orinoco tar, coal liquefaction oil, and heavy oils obtained by hydrorefining of these oils. It may further contain relatively light oils such as straight-run light oil, vacuum gas oil, desulfurized light oil and desulfurized vacuum gas oil. For this embodiment, atmospheric distillation bottom oil and vacuum distillation bottom oil are most preferably used.

The conditions for fluidized catalytic cracking are not particularly restricted so long as they yield heavy oil having a boiling point and sulfur content satisfying the conditions mentioned above, and for example, preferably the reaction temperature is 480-550°C, the total pressure is 0.1-0.3 MPa, the catalyst/oil ratio is 1-20 wt/wt and the contact time is 1-10 seconds. The catalyst used for fluidized catalytic cracking may be, for example, a silica-alumina catalyst or zeolite catalyst, or such a catalyst supporting a metal such as platinum. Commercial catalysts may also be used.

The desulfurized heavy oil is preferably heavy oil with an initial boiling point of 200°C or higher, obtained by hydrodesulfurization of heavy oil with a sulfur content of 2 wt% or greater under conditions with a total pressure of at least 16 MPa, to a hydrotreatment rate of no greater than 30%. The heavy oil used as the stock oil for desulfurized heavy oil may be, for example, crude oil, atmospheric distillation bottom oil or vacuum distillation bottom oil obtained by distillation of crude oil, or visbreaking oil, tar sand oil, shale oil, or a blended oil of the foregoing. Atmospheric distillation bottom oil and vacuum distillation bottom oil are preferably used among these.

The hydrodesulfurization to obtain the desulfurized heavy oil is carried out under conditions with a total pressure of 16 MPa or greater, preferably 17 MPa or greater and more preferably 18 MPa or greater. At a total pressure of below 16 MPa, decomposition of the heavy oil by hydrodesulfurization will proceed excessively, making it impossible to obtain heavy oil effective as a stock oil for coke coal (petroleum coke).

The conditions for hydrodesulfurization other than the total pressure are not particularly restricted so long as the hydrotreatment rate is no greater than 30%, but each of the conditions are preferably set as follows. Specifically, the temperature for the hydrodesulfurization is preferably 300-500°C and more preferably 350-450°C; the hydrogen/oil ratio is preferably 400-3000 NL/L and more preferably 500-1800 NL/L; the hydrogen partial pressure is preferably 7-20 MPa and more preferably 8-17 MPa; and the liquid space velocity (LHSV) is preferably 0.1-3 h$^{-1}$, more preferably 0.15-1.0 h$^{-1}$ and even more preferably 0.15-0.75 h$^{-1}$.

The catalyst used for the hydrodesulfurization (hydrodesulfurization catalyst) may be a Ni-Mo catalyst, Co-Mo catalyst, or a combination of these, and it may be a commercially available product.

The heavy oil with an initial boiling point of 200°C or higher and preferably 250°C or higher, from the hydrodesulfurized oil obtained by the hydrodesulfurization described above, is used as desulfurized heavy oil.

The method for producing artificial graphite is preferably a method of preparing a stock oil composition as a blend of two or more stock oils selected from among vacuum residue oil, FCC heavy oil and desulfurized heavy oil, subjecting the stock oil composition to coking to produce petroleum raw coke, calcining the petroleum raw coke, and then further converting it to artificial graphite to obtain artificial graphite.

The blending ratio of the vacuum residue oil, FCC heavy oil and desulfurized heavy oil is not particularly restricted so long as the desired artificial graphite can be obtained, and two or three different types may be used in combination. For a combination of FCC heavy oil and desulfurized heavy oil, for example, it is blended with a desulfurized heavy oil content ratio of preferably 5 wt% or greater, more preferably 10 wt% or greater and even more preferably 15 wt% or greater, and also preferably no greater than 95 wt%, more preferably no greater than 90 wt% and even more preferably no greater than 85 wt%.

For a combination of FCC heavy oil, desulfurized heavy oil and vacuum residue oil, it is blended with a vacuum residue oil content ratio of preferably 10 wt% or greater, more preferably 20 wt% or greater and even more preferably 30 wt% or greater, and also preferably no greater than 70 wt%, more preferably no greater than 60 wt% and even more preferably no greater than 50 wt%. The FCC heavy oil and desulfurized heavy oil in this case are blended at greater than 10 wt% each. A blend composition preferably comprises at least desulfurized heavy oil.

The method for coking the blend to produce petroleum raw coke is preferably delayed coking. More specifically, the blend composition is placed in a delayed coker and subjected to coking treatment under pressure. The pressure and temperature in the delayed coker are preferably 300-800 kPa and 400-600°C, respectively.

The petroleum raw coke is calcined at about 1200-1500°C and preferably 1350-1450°C using a rotary kiln or shaft kiln to obtain (calcined) petroleum coke. The obtained (calcined) petroleum coke is then further heat treated at 2300-2600°C, to obtain artificial graphite according to the invention. When artificial graphite obtained at a heat treatment temperature of above 2600°C is used as a negative electrode material the charge rate of the lithium ion secondary battery is insufficient, and when artificial graphite obtained at a heat treatment temperature of below 2300°C is used as a negative electrode material the energy density per unit volume of the lithium ion secondary battery is insufficient.

<Lithium ion secondary battery>

A lithium secondary battery employing artificial graphite for the negative electrode of a lithium ion secondary battery according to the invention will now be explained.

There are no particular restrictions on the method for producing the negative electrode of the lithium ion secondary battery, and for example, it may be obtained by pressure molding a mixture comprising the artificial graphite of the invention, a binder and if necessary a conductive aid and organic solvent. As an alternative method, the artificial graphite, a binder and a conductive aid may be formed into a slurry in an organic solvent, and the slurry coated onto a collector and dried.

The binder may be polyvinylidene fluoride, polytetrafluoroethylene or SBR (styrene-butadiene rubber). A suitable amount of binder is 1-30 parts by weight, with about 3-20 parts by weight being preferred, with respect to 100 parts by weight of the artificial graphite.

The conductive aid may be carbon black, graphite, acetylene black, conductive indium-tin oxide, or a conductive polymer such as polyaniline, polythiophene or polyphenylenevinylene. The amount of conductive aid used is preferably 1-15 parts by weight with respect to 100 parts by weight of the artificial graphite.

As organic solvents there may be mentioned dimethylformamide, N-methylpyrrolidone, isopropanol and toluene.

The method for mixing the artificial graphite and binder, and the conductive aid and organic solvent used as necessary, may employ a known apparatus such as a screw-type kneader, ribbon mixer, universal mixer or planetary mixer. The mixture is formed by roll pressing or press pressing, with the pressure preferably being about 1-3 t/cm$^2$.

As an alternative method for producing the negative electrode for a lithium ion secondary battery, the artificial graphite, binder and conductive aid may be formed into a slurry in an organic solvent, and the slurry coated onto a collector and dried.

The material and form of the collector are not particularly restricted, and for example, aluminum, copper, nickel, titanium, or stainless steel may be used as a foil, perforated foil or mesh, and formed as a band. A porous material such as a porous metal (metal foam) or carbon paper may also be used.

The method for coating the negative electrode material slurry onto the collector is not particularly restricted, and as examples there may be mentioned known methods such as metal mask printing, electrostatic coating method, dip coating, spray coating, roll coating, doctor blading, gravure coating, and screen printing. After coating, it may be subjected to rolling treatment with a flat press or calender roll, if necessary. Also, integration of the collector with a negative electrode material slurry molded into the form of a sheet, or pellets may be carried out by a known method using, for example, a roll or press, or a combination thereof.

A lithium ion secondary battery employing artificial graphite for the negative electrode of a lithium ion secondary battery according to the invention can be obtained by, for example, situating a negative electrode for a lithium ion secondary battery, produced in the manner described above, opposite a positive electrode via a separator, and injecting an electrolyte solution between them.

There are no particular restrictions on the active material used for the positive electrode, and for example, a metal compound, metal oxide, metal sulfide or conductive polymer material capable of doping or intercalation with lithium ion may be used, examples of which include lithium cobaltate ($LiCoO_2$), lithium nickelate ($LiNiO_2$), lithium manganate ($LiMnO_2$), complex oxides of the foregoing ($LiCo_XNi_YMn_ZO_2$, X+Y+Z = 1), lithium manganese spinel ($LiMn_2O_4$), lithium vanadium compounds, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine-type $LiMPO_4$ (M:Co, Ni, Mn, Fe), conductive polymers such as polyacetylene, polyaniline, polypyrrole, polythiophene and polyacene, porous carbon, and mixtures of the foregoing.

Examples of separators to be used include nonwoven fabrics, cloths and microporous films composed mainly of polyolefins such as polyethylene or polypropylene, as well as combinations thereof. When the positive electrode and negative electrode of the lithium ion secondary battery to be fabricated are not in direct contact, it is not necessary to use a separator.

The electrolyte solution and electrolytes used in the lithium secondary battery may be a publicly known organic electrolyte solution, inorganic solid electrolytes or polymer solid electrolytes. An organic electrolyte solution is preferred from the viewpoint of electrical conductivity.

For organic electrolyte solutions there may be mentioned organic solvents including ethers such as dibutyl ether, ethyleneglycol monomethyl ether, ethyleneglycol monoethyl ether, ethyleneglycol monobutyl ether, diethyleneglycol monomethyl ether and ethyleneglycol phenyl ether; amides such as N-methylformamide, N,N-dimethylformamide, N-ethylformamide, N,N-diethylformamide, N-methylacetamide, N,N-dimethylacetamide, N-ethylacetamide and N,N-diethylacetamide; sulfur-containing compounds such as dimethyl sulfoxide and sulfolane; dialkylketones such as methyl ethyl ketone and methyl isobutyl ketone; cyclic ethers such as tetrahydrofuran and 2-methoxytetrahydrofuran; carbonates such as ethylene carbonate, butylene carbonate, diethyl carbonate, dimethyl carbonate, methylethyl carbonate, propylene carbonate and vinylene carbonate; $\gamma$-butyrolactone; N-methylpyrrolidone; acetonitrile and nitromethane . Preferred examples among these include ethylene carbonate, butylene carbonate, diethyl carbonate, dimethyl carbonate, methylethyl carbonate, propylene carbonate, vinylene carbonate, $\gamma$-butyrolactone, diethoxyethane, dimethyl sulfoxide, acetonitrile and tetrahydrofuran, with particularly preferred examples including carbonate-based non-aqueous solvents such as ethylene carbonate and propylene carbonate. Any of these solvents may be used alone, or two or more thereof may be used in admixture.

Lithium salts are used as solutes (electrolytes) in these solvents. Commonly known lithium salts include $LiClO_4$ $LiBF_4$, $LiPF_6$, $LiAlCl_4$, $LiSbF_6$, LiSCN, LiCl, $LiCF_3SO_3$, $LiCF_3CO_2$ and LiN $(CF_3SO_2)_2$.

As polymer solid electrolytes there may be mentioned polyethylene oxide derivatives and polymers comprising those derivatives, polypropylene oxide derivatives and polymers comprising those derivatives, phosphoric acid ester polymers, and polycarbonate derivatives and polymers comprising those derivatives.

There are absolutely no restrictions on selection of any of the other members required for construction of the battery.

There are also no restrictions on the structure of the lithium ion secondary battery employing artificial graphite according to this invention as the negative electrode material, but normally it will have a structure comprising a positive electrode and negative electrode, with a separator if necessary, wrapped up in a flat spiral fashion as a rolled polar plate group, or stacked as plates into a layered polar plate group, with the polar plate group being sealed in an outer casing. Lithium ion secondary batteries are used as paper batteries, button batteries, coin batteries, stacked cells and cylindrical cells.

A lithium ion secondary battery employing artificial graphite for the negative electrode of a lithium ion secondary battery according to the invention has excellent rapid charge-discharge characteristics compared to a lithium ion secondary battery employing a conventional carbon material, and it can be used in automobiles, including hybrid vehicles, plug-in hybrid vehicles and electric vehicles.

**Examples**

The present invention will now be explained in greater detail by examples.

[Example 1]

(1) Fabrication of negative electrode carbon material

Atmospheric distillation bottom oil with a sulfur content of 3.0 wt% was hydrodesulfurized in the presence of a Ni-Mo catalyst to obtain hydrodesulfurized oil. Separately, desulfurized vacuum gas oil (sulfur content: 500 ppm by weight, 15°C density: 0.88 $g/cm^3$) was subjected to fluidized catalytic cracking to obtain fluidized catalytic cracked bottom oil. The hydrodesulfurized oil and fluidized catalytic cracked bottom oil were blended at 1:3 (weight ratio), and the blend was introduced into a delayed coker and treated under inert gas at 550°C to obtain petroleum raw coke. Next, the raw coke was introduced into a rotary kiln and calcined at 1400°C to obtain needle coke. The obtained needle coke was pulverized to obtain coke fine particles with a mean particle size of 25 $\mu$m. The obtained needle coke fine particles were graphitized at 2400°C to obtain artificial graphite fine particles (artificial graphite A) having a prescribed graphite structure. The artificial graphite A was further graphitized at a temperature of 3000°C under an inert gas atmosphere.

Table 1 shows the properties of artificial graphite A and the artificial graphite A after graphitizing at 3000°C (3000°C treated product). The interlayer distance ($d_{002}$) and crystallite size (La, Lc) were measured by X-ray diffraction according to "Measurement Methods for Lattice Constants and Crystallite Sizes of Artificial Graphite" established by the 117th Committee of the Japan Society for the Promotion of Science.

[Table 1]

| Carbon material | $d_{002}$ (nm) | La (nm) | Lc (nm) |
|---|---|---|---|
| Artificial graphite A (Graphitizing treatment temperature: 2400°C) | 0.3367 | 163 | 99 |
| 3000°C Treated product | 0.3357 | 710 | 226 |

(2) Evaluation of negative electrode material charge-discharge

(a) Fabrication of negative electrode

Artificial graphite A as the active material, acetylene black (AB) as the conductive material and polyvinylidene fluoride (PVDF) as the binder were combined in N-methyl-2-pyrrolidone at a ratio of 80:2:5 (weight ratio) to prepare a slurry. The slurry was coated onto a copper foil and dried for 10 minutes with a hot plate, and press molded with a roll press.

(b) Fabrication of evaluation cell

There were used the aforementioned composition (30 × 50 mm) as the negative electrode, lithium nickelate (30 × 50 mm) as the positive electrode, a mixture of ethylene carbonate (EC)/methyl ethyl carbonate (MEC) (EC/MEC weight ratio: 3/7, solute: $LiPF_6$ (1 M volume molar concentration)) as the electrolyte solution and a polyethylene porous film as the separator.

(c) Evaluation of charge rate characteristic

The charge rate was evaluated with different current densities (1C, 3C, 5C, 10C, 20C), using a method of charging with constant current and switching to constant voltage charge upon reaching a constant voltage (4.2 V). The results are shown in Table 2.

[Table 2]

| Rate (C) | Charge capacity (mAh) | Utilization factor (%) |
|---|---|---|
| 1 | 18.8 | 100 |
| 3 | 17.6 | 93.6 |
| 5 | 16.6 | 88.3 |
| 10 | 14.5 | 77.1 |
| 20 | 5.6 | 29.8 |

(d) Evaluation of discharge rate characteristic

The discharge rate was evaluated by discharge at different current densities (1C, 2C, 3C, 5C, 10C, 20C), after charging at 0.2C and switching to constant voltage charge upon reaching a constant voltage and charging for 8 hours. The results are shown in Table 3.

[Table 3]

| Rate (C) | Discharge capacity (mAh) | Utilization factor (%) |
|---|---|---|
| 1 | 18.2 | 100 |
| 2 | 17.6 | 96.7 |
| 3 | 17.2 | 94.5 |
| 5 | 16.6 | 91.2 |
| 10 | 15.2 | 83.5 |
| 20 | 5.5 | 30.2 |

As shown in Tables 2 and 3, when artificial graphite A was used as the lithium ion secondary battery negative electrode material with an ethylene carbonate/methylethyl carbonate-based electrolyte solution solvent, a relatively high charge-discharge capacity and utilization factor were maintained even with a high charge-discharge rate (10C).

[Comparative Example 1]

Artificial graphite fine particles (artificial graphite B) having a prescribed graphite structure were obtained in the same manner as Example 1, except that the graphitization temperature of the needle coke fine particles was 2800°C instead of 2400°C. The artificial graphite B was further graphitized at a temperature of 3000°C under an inert gas atmosphere. Table 3 shows the properties of artificial graphite B and the artificial graphite B after graphitizing at 3000°C (3000°C treated product).

[Table 4]

| Carbon material | $d_{002}$ (nm) | La (nm) | Lc (nm) |
|---|---|---|---|
| Artificial graphite B (Graphitizing treatment temperature: 2800°C) | 0.3360 | 278 | 152 |
| 3000°C Treated product | 0.3357 | 710 | 226 |

An evaluation cell was fabricated in the same manner as Example 1, except that artificial graphite B was used as the negative electrode active material instead of artificial graphite A. The results of evaluating the charge rate property and discharge rate property in the same manner as Example 1 are shown in Table 5 and Table 6.

When artificial graphite B was used as the negative electrode material for a lithium ion secondary battery, with a high charge-discharge rate (10C), the reduction in service capacity and utilization factor were small compared to Example 1, but the charge capacity and utilization factor were still significantly reduced.

[Table 5]

| Rate (C) | Charge capacity (mAh) | Utilization factor (%) |
|---|---|---|
| 1 | 17.3 | 100 |
| 3 | 15.4 | 89.0 |
| 5 | 13.8 | 79.8 |
| 10 | 9.6 | 55.5 |
| 20 | 1.1 | 6.4 |

[Table 6]

| Rate (C) | Discharge capacity (mAh) | Utilization factor (%) |
|---|---|---|
| 1 | 18.1 | 100 |
| 2 | 17.6 | 97.2 |
| 3 | 17.2 | 95.0 |
| 5 | 16.6 | 91.8 |
| 10 | 14.8 | 81.8 |
| 20 | 3.9 | 21.5 |

[Comparative Example 2]

Artificial graphite fine particles (artificial graphite C) having a prescribed graphite structure were obtained in the same manner as Example 1, except that the graphitization temperature of the needle coke fine particles was 2200°C instead of 2400°C. The artificial graphite C was further graphitized at a temperature of 3000°C under an inert gas atmosphere. Table 7 shows the properties of artificial graphite C and the artificial graphite C after graphitizing at 3000°C (3000°C treated product).

[Table 7]

| Carbon material | $d_{002}$ (nm) | La (nm) | Lc (nm) |
|---|---|---|---|
| Artificial graphite C (Graphitizing treatment temperature: 2200°C) | 0.3386 | 66 | 56 |
| 3000°C Treated product | 0.3357 | 710 | 226 |

An evaluation cell was fabricated in the same manner as Example 1, except that artificial graphite C was used as the negative electrode active material instead of artificial graphite A. The results of evaluating the charge rate property and discharge rate property in the same manner as Example 1 are shown in Table 8 and Table 9.

When artificial graphite C was used as the negative electrode material for a lithium ion secondary battery, with a high charge-discharge rate (10C), the utilization factor during discharge and the utilization factor during charge were approximately the same as in Example 1, but the absolute value of the capacity was reduced.

[Table 8]

| Rate (C) | Charge capacity (mAh) | Utilization factor (%) |
|---|---|---|
| 1 | 15.0 | 100 |
| 3 | 14.4 | 96.0 |
| 5 | 13.3 | 88.7 |
| 10 | 11.9 | 79.3 |
| 20 | 4.3 | 28.6 |

[Table 9]

| Rate (C) | Discharge capacity (mAh) | Utilization factor (%) |
|---|---|---|
| 1 | 15.1 | 100 |
| 2 | 14.3 | 95.0 |
| 3 | 14.2 | 94.2 |
| 5 | 13.7 | 90.8 |
| 10 | 12.3 | 81.8 |
| 20 | 4.3 | 28.5 |

[Comparative Example 3]

Desulfurized vacuum gas oil (sulfur content: 500 ppm by weight, 15°C density: 0.88 g/cm$^3$) was subjected to fluidized catalytic cracking to obtain fluidized catalytic cracked bottom oil. The fluidized catalytic cracked bottom oil was introduced into a delayed coker and treated under inert gas at 550°C to obtain petroleum raw coke. Next, the raw coke was introduced into a rotary kiln and calcined at 1400°C to obtain needle coke.

Artificial graphite fine particles (artificial graphite D) having a prescribed graphite structure were obtained by graphitizing needle coke fine particles at 2400°C in the same manner as Example 1, except that the needle coke fine particles were produced from a single stock oil, as described above. The artificial graphite D was further graphitized at a temperature of 3000°C under an inert gas atmosphere. Table 10 shows the properties of artificial graphite D and the artificial graphite D after graphitizing at 3000°C (3000°C treated product).

[Table 10]

| Carbon material | $d_{002}$ (nm) | La (nm) | Lc (nm) |
|---|---|---|---|
| Artificial graphite D (Graphitizing treatment temperature: 2400°C) | 0.3380 | 70 | 40 |
| 3000°C Treated product | 0.3362 | 240 | 75 |

An evaluation cell was fabricated in the same manner as Example 1, except that artificial graphite D was used as the negative electrode active material instead of artificial graphite A. The results of evaluating the charge rate property and discharge rate property in the same manner as Example 1 are shown in Table 11 and Table 12.

When artificial graphite D was used as the negative electrode material for a lithium ion secondary battery, with a high charge-discharge rate (10C), the utilization factor during discharge and the utilization factor during charge were approximately the same as in Example 1, but the absolute value of the capacity was reduced.

[Table 11]

| Rate (C) | Charge capacity (mAh) | Utilization factor (%) |
|---|---|---|
| 1 | 15.5 | 100 |
| 3 | 14.6 | 94.2 |
| 5 | 13.8 | 89.0 |
| 10 | 11.6 | 74.8 |
| 20 | 3.8 | 23.2 |

[Table 12]

| Rate (C) | Discharge capacity (mAh) | Utilization factor (%) |
|---|---|---|
| 1 | 15.4 | 100 |
| 2 | 14.6 | 94.8 |
| 3 | 14.4 | 93.5 |
| 5 | 13.5 | 87.6 |
| 10 | 12.0 | 77.9 |
| 20 | 4.3 | 28.0 |

**Industrial Applicability**

According to the invention it is possible to provide artificial graphite for the negative electrode of a lithium ion secondary battery, that is useful for achieving superior levels of both high energy density and high charge-discharge rates in lithium ion secondary batteries, as well as a method for production thereof.

**Claims**

1. An artificial graphite for the negative electrode of a lithium ion secondary battery, having a crystallite size Lc of 60-120 nm in the c-axial direction according to X-ray diffraction, and a crystallite size Lc of 150 nm or greater when subjected to graphitizing at a temperature of 3000°C under an inert gas atmosphere, wherein the artificial graphite is obtainable by coking treatment of a stock oil composition obtained by combining two or more different stock oils selected from among vacuum residue oil, FCC heavy oil and desulfurized heavy oil produced in the petroleum refining process, followed by calcining at a temperature of 1200-1500°C and heat treatment at 2300-2600°C.

2. The artificial graphite for the negative electrode of a lithium ion secondary battery according to claim 1, having a crystallite size La of 100-250 nm in the a-axial direction according to X-ray diffraction, and a crystallite size La of 300 nm or greater when subjected to graphitizing.

3. The artificial graphite for the negative electrode of a lithium ion secondary battery according to claim 1 or 2, having a mean interlayer distance $d_{002}$ of 0.3365-0.3375 nm according to X-ray diffraction, and a mean interlayer distance $d_{002}$ of no greater than 0.3361 nm when subjected to graphitizing.

4. A method for the production of artificial graphite for the negative electrode of a lithium ion secondary battery, comprising:

   a first step of coking treatment of a stock oil composition obtained by combining two or more different stock oils selected from among vacuum residue oil, FCC heavy oil and desulfurized heavy oil produced in the petroleum refining process,
   a second step of calcining the treated product obtained from the first step at a temperature of 1200-1500°C, and

a third step of heat treating the treated product obtained from the second step at a temperature of 2300-2600°C, wherein the artificial graphite obtained from the third step has a crystallite size Lc of 60-120 nm in the c-axial direction according to X-ray diffraction, and a crystallite size Lc of 150 nm or greater when subjected to graphitizing in an inert gas atmosphere at a temperature of 3000°C.

## Patentansprüche

1. Künstlicher Graphit für die negative Elektrode einer Lithiumionen-Sekundärbatterie, mit einer Kristallitgröße Lc von 60-120 nm in der c-Achsen-Richtung gemäß Röntgenbeugung, und einer Kristallitgröße Lc von 150 nm oder größer, wenn er einem Graphitieren bei einer Temperatur von 3000° C unter einer Inertgasatmosphäre unterworfen wird, wobei der künstliche Graphit durch eine Verkokungsbehandlung einer Einsatzmaterialölzusammensetzung, die durch Kombinieren von zwei oder mehr unterschiedlichen Einsatzmaterialölen, ausgewählt aus Vakuumrückstandsöl, FCC-Schweröl und entschwefeltem Schweröl, das in dem Erdölraffinationsprozess produziert wird, erhalten wird, gefolgt von einem Calcinieren bei einer Temperatur von 1200-1500° C und einer Wärmebehandlung bei 2300-2600° C erhältlich ist.

2. Künstlicher Graphit für die negative Elektrode einer Lithiumionen-Sekundärbatterie gemäß Anspruch 1, mit einer Kristallitgröße La von 100-250 nm in der a-Achsen-Richtung gemäß Röntgenbeugung, und einer Kristallitgröße La von 300 nm oder größer, wenn er einem Graphitieren unterworfen wird.

3. Künstlicher Graphit für die negative Elektrode einer Lithiumionen-Sekundärbatterie gemäß Anspruch 1 oder 2, mit einem mittleren Schichtenabstand $d_{002}$ von 0,3365-0,3375 nm gemäß Röntgenbeugung, und einem mittleren Schichtenabstand $d_{002}$ von nicht mehr als 0,3361 nm, wenn er einem Graphitieren unterworfen wird.

4. Verfahren zur Herstellung von künstlichem Graphit für die negative Elektrode einer Lithiumionen-Sekundärbatterie, umfassend:

   einen ersten Schritt einer Verkokungsbehandlung einer Einsatzmaterialölzusammensetzung, die durch Kombinieren von zwei oder mehr unterschiedlichen Einsatzmaterialölen, ausgewählt aus Vakuumrückstandsöl, FCC-Schweröl und entschwefeltem Schweröl, das in dem Erdölraffinationsprozess produziert wird, erhalten wird,
   einen zweiten Schritt des Calcinierens des aus dem ersten Schritt erhaltenen behandelten Produkts bei einer Temperatur von 1200-1500° C, und
   einen dritten Schritt des Wärmebehandelns des aus dem zweiten Schritt erhaltenen behandelten Produkts bei einer Temperatur von 2300-2600° C,
   wobei der aus dem dritten Schritt erhaltene künstliche Graphit eine Kristallitgröße Lc von 60-120 nm in der c-Achsenrichtung gemäß Röntgenbeugung und eine Kristallitgröße Lc von 150 nm oder größer, wenn er einem Graphitieren in einer Inertgasatmosphäre bei einer Temperatur von 3000° C unterworfen wird, aufweist.

## Revendications

1. Graphite artificiel pour l'électrode négative d'une batterie secondaire lithium-ion, ayant une taille de cristallite Lc de 60-120 nm dans la direction de l'axe c selon la diffraction de rayons X, et une taille de cristallite Lc supérieure ou égale à 150 nm lorsqu'il est soumis à une graphitisation à une température de 3000°C sous une atmosphère de gaz inerte, dans lequel le graphite artificiel peut être obtenu par cokéfaction d'une composition d'huile de base obtenue en combinant deux ou plusieurs huiles de base différentes choisies parmi l'huile de résidu sous vide, l'huile lourde de FCC et l'huile lourde désulfurée produite selon le procédé de raffinage du pétrole, suivi d'une calcination à une température de 1200-1500°C et d'un traitement thermique à 2300-2600°C.

2. Graphite artificiel pour l'électrode négative d'une batterie secondaire lithium-ion selon la revendication 1, ayant une taille de cristallite La de 100-250 nm dans la direction de l'axe a selon la diffraction de rayons X, et une taille de cristallite La supérieure ou égale à 300 nm lorsqu'il est soumis à une graphitisation.

3. Graphite artificiel pour l'électrode négative d'une batterie secondaire lithium-ion selon la revendication 1 ou la revendication 2, ayant une une distance intercouche moyenne $d_{00}2$ comprise entre 0,3365 à 0,3375 nm selon la diffraction de rayons X, et une distance intercouche moyenne $d_{00}2$ inférieure ou égale à 0,3361 nm lorsqu'il est soumis à une graphitisation.

4. Procédé pour la production de graphite artificiel pour l'électrode négative d'une batterie secondaire lithium-ion, comprenant:

une première étape de cokéfaction d'une composition d'huile de base obtenue en combinant deux ou plusieurs huiles de base différentes choisies parmi l'huile de résidu sous vide, l'huile lourde de FCC et l'huile lourde désulfurée produite selon le procédé de raffinage du pétrole,
une deuxième étape de calcination du produit traité obtenu lors de la première étape à une température de 1200-1500°C, et
une troisième étape de traitement thermique du produit traité obtenu lors de la deuxième étape à une température de 2300-2600°C,
dans lequel le graphite artificiel obtenu lors la troisième étape présente une taille de cristallite Lc de 60-120 nm dans la direction de l'axe c selon la diffraction de rayons X, et une taille de cristallite Lc supérieure ou égale à 150 nm lorsqu'il est soumis à une graphitisation à une température de 3000°C sous une atmosphère de gaz inerte.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3056519 B
- JP 4024831 A
- JP 2003297357 A